# EUROPEAN PATENT APPLICATION

(11) **EP 4 450 018 A1**
(43) Date of publication of application: **23.10.2024**
(21) Application number: 22906566.9
(22) Date of filing: 13.12.2022
(51) Int. Cl.: A61C 7/00

(54) **DENTAL ORTHODONTIC APPLIANCE PROVIDED WITH PROTRUDING RIDGE**

(30) Priority: 13.12.2021 CN 202111522894
(71) Applicant: Wuxi EA Biotechnology Limited, Wuxi, Jiangsu 214001 (CN)
(72) Inventor: HOU, Junxiang, Wuxi, Jiangsu 214001 (CN); ZHENG, Yikan, Wuxi, Jiangsu 214001 (CN)
(74) Representative: Winter, Brandl - Partnerschaft mbB
(86) International application number: PCT/CN2022/138727
(87) International publication number: WO 2023/109821

(57) **Abstract**

The present invention discloses a dental orthodontic appliance with a ridge, including an appliance body forming a cavity for accommodating teeth, and the ridge connected to the appliance body. The ridge protrudes from the appliance body in a direction away from the cavity. By providing the ridge on the appliance body that protrudes in the direction away from the cavity, a moment of inertia of the entire dental orthodontic appliance is increased. The moment of inertia can enhance an ability of the dental orthodontic appliance to resist bending in the direction away from the cavity, which is the primary direction of force application when removing the orthodontic appliance. That is, the arrangement of the ridge can improve the local rigidity of the orthodontic appliance, thereby preventing deformation or fracture of the dental orthodontic appliance. Additionally, as the ridge is directly incorporated into the dental orthodontic appliance, patients can achieve the aforementioned effects by directly wearing the dental orthodontic appliance, making it convenient to use and improving user experience.

## Description

The present application claims priority to Chinese Patent Application No. 202111522894.7, filed on December 13, 2021, entitled "Dental Orthodontic Appliance with A Ridge," the entire contents of which are incorporated herein by reference.

### TECHNICAL FIELD

The present invention relates to the field of dental orthodontic technology, and particularly to a dental orthodontic appliance with a ridge.

### BACKGROUND ART

During use of a dental orthodontic appliance, additional force needs to be applied to achieve repeated wearing and removal of the dental orthodontic appliance. When external force is substantial, the dental orthodontic appliance may deform or fracture, affecting the use of the dental orthodontic appliance or preventing it from achieving intended orthodontic effect.

### SUMMARY

The purpose of the present invention is to provide a dental orthodontic appliance with a ridge that can prevent deformation or fracture of the dental orthodontic appliance.

In order to achieve one of the above objects, one embodiment of the present invention provides a dental orthodontic appliance with a ridge, including an appliance body forming a cavity for accommodating teeth, and the ridge connected to the appliance body, wherein the ridge protrudes from the appliance body in a direction away from the cavity.

As a further improvement of one embodiment of the present invention, the ridge is strip-shaped.

As a further improvement of one embodiment of the present invention, the ridge includes a receiving cavity communicating with the cavity.

As a further improvement of one embodiment of the present invention, the receiving cavity is integrally formed with the appliance body.

As a further improvement of one embodiment of the present invention, the ridge further includes a filling part fixed within the receiving cavity.

As a further improvement of one embodiment of the present invention, the ridge is fixed on a side surface of the appliance body away from the cavity.

As a further improvement of one embodiment of the present invention, an extension direction of the ridge is parallel to a mesiodistal direction.

As a further improvement of one embodiment of the present invention, an extension direction of the ridge is perpendicular to a mesiodistal direction.

As a further improvement of one embodiment of the present invention, an angle formed between an extension direction of the ridge and a mesiodistal direction is an acute angle.

As a further improvement of one embodiment of the present invention, the ridge is located on a buccal surface, a lingual surface, or an occlusal surface of the appliance body.

As a further improvement of one embodiment of the present invention, the ridge is set corresponding to an anterior teeth area and/or a posterior teeth area of teeth to be treated.

As a further improvement of one embodiment of the present invention, the ridge is set corresponding to at least one of a tooth surface, an interdental space, or a void area of teeth to be treated.

As a further improvement of one embodiment of the present invention, in the direction away from the cavity, the ridge has a first height, and a maximum value of the first height ranges from 0.1 mm to 10 mm.

As a further improvement of one embodiment of the present invention, in an extension direction of the ridge, the ridge has a first length, and the first length is greater than 0.5 mm.

As a further improvement of one embodiment of the present invention, in a direction simultaneously perpendicular to the direction away from the cavity and an extension direction of the ridge, the ridge has a first width, and a maximum value of the first width ranges from 0.2 mm to 8 mm.

As a further improvement of one embodiment of the present invention, in the direction away from the cavity, an outer contour of a cross-section of the ridge is rectangular, trapezoidal, arc-shaped, triangular, polygonal, or "M"-shaped.

As a further improvement of one embodiment of the present invention, the dental orthodontic appliance includes multiple ridges located on the appliance body.

As a further improvement of one embodiment of the present invention, the multiple ridges are distributed at intervals.

As a further improvement of one embodiment of the present invention, the multiple ridges are interconnected to form a combined ridge.

As a further improvement of one embodiment of the present invention, the combined ridge includes a free end.

As a further improvement of one embodiment of the present invention, the combined ridge forms an enclosed area.

As a further improvement of one embodiment of the present invention, an occlusal surface of the appliance body includes a transition area corresponding to an interdental space of teeth to be treated, and the transition area includes the ridge.

As a further improvement of one embodiment of the present invention, the transition area also includes a matching area connecting the ridge, and a first gap between the ridge and the interdental space is greater than a second gap between the matching area and the interdental space.

As a further improvement of one embodiment of the present invention, the dental orthodontic appliance includes two ridges distributed at intervals, and the two ridges are connected by the matching area.

As a further improvement of one embodiment of the present invention, the ridge includes a recessed part and two protruding parts located on both sides of the recessed part, and the recessed part is closer to the interdental space than the protruding parts.

As a further improvement of one embodiment of the present invention, a thickness of the ridge is greater than 0.2 mm.

As a further improvement of one embodiment of the present invention, the ridge includes an inner wall close to the interdental space, a cavity is formed between the inner wall and the interdental space, and in a direction from a buccal surface to a lingual surface of the appliance body, a maximum value of a second width of the cavity ranges from 0.5 mm to 5 mm.

As a further improvement of one embodiment of the present invention, the interdental space is located between a first tooth and a second tooth, the occlusal surface includes a first occlusal surface and a second occlusal surface matching the first tooth and the second tooth respectively, and the ridge includes a first end and a second end relatively set in an extension direction of the ridge, with the first end close to the first occlusal surface and the second end close to the second occlusal surface.

As a further improvement of one embodiment of the present invention, there is an extraction area between the first tooth and the second tooth, the appliance body includes a void area corresponding to the extraction area, and the transition area covers the void area.

As a further improvement of one embodiment of the present invention, the first end is set close to a buccal surface of the appliance body, and the second end is set close to a lingual surface of the appliance body.

As a further improvement of one embodiment of the present invention, the extension direction of the ridge is parallel to a mesiodistal direction.

As a further improvement of one embodiment of the present invention, a first cross-section is defined on the dental orthodontic appliance, the first cross-section passes through the ridge and is perpendicular to a mesiodistal direction, an intersection area of the ridge and the first cross-section includes lowest points close to a buccal surface or a lingual surface, and in a direction from the buccal surface to the lingual surface of the dental orthodontic appliance, a distance between the lowest points and a gingival end in the first cross-section ranges from 0.5 mm to 8 mm.

As a further improvement of one embodiment of the present invention, the lowest points include a first lowest point close to the buccal surface and a second lowest point close to the lingual surface, and in the direction from the buccal surface to the lingual surface of the dental orthodontic appliance, there is a first distance between the first lowest point and the gingival end on the buccal surface in the first cross-section, there is a second distance between the second lowest point and the gingival end on the lingual surface in the first cross-section, and both the first distance and the second distance range from 0.5 mm to 4 mm.

As a further improvement of one embodiment of the present invention, both the first distance and the second distance range from 1 mm to 3.5 mm.

As a further improvement of one embodiment of the present invention, a second cross-section is defined on the dental orthodontic appliance, the second cross-section passes through the ridge and is perpendicular to a direction from a buccal surface to a lingual surface, an intersection area of the first occlusal surface and the second cross-section includes a first highest point close to the transition area, an intersection area of the second occlusal surface and the second cross-section includes a second highest point close to the transition area, an intersection point of the first end of the ridge and the second cross-section is a first intersection point, an intersection point of the second end and the second cross-section is a second intersection point, the first highest point is farther from a gingival end than the first intersection point, and the second highest point is farther from the gingival end than the second intersection point.

As a further improvement of one embodiment of the present invention, in the direction from the occlusal surface to the gingival end of the dental orthodontic appliance, there is a first distance between the first highest point and the gingival end, there is a second distance between the first intersection point and the gingival end, there is a third distance between the second highest point and the gingival end, there is a fourth distance between the second intersection point and the gingival end, the ratio of the second distance to the first distance is not less than 20%, and the ratio of the fourth distance to the third distance is not less than 20%.

As a further improvement of one embodiment of the present invention, the ratio of the second distance to the first distance is not greater than 95%, and the ratio of the fourth distance to the third distance is not greater than 95%.

As a further improvement of one embodiment of the present invention, the second distance is 40%-80% of the first distance, and the fourth distance is 40%-80% of the third distance.

As a further improvement of one embodiment of the present invention, in a direction from the occlusal surface to the gingival end of the dental orthodontic appliance, any point of the dental orthodontic appliance has a vertical distance from the gingival end, the vertical distance gradually decreases between the first highest point and the first intersection point, and the vertical distance gradually decreases between the second highest point and the second intersection point.

As a further improvement of one embodiment of the present invention, the vertical distance remains constant or shows a gradual change trend between the first intersection point and the second intersection point.

In order to achieve one of the above objects, one embodiment of the present invention provides a dental orthodontic appliance with a ridge, including an appliance body forming a cavity for accommodating teeth, an occlusal surface of the appliance body includes a transition area corresponding to an interdental space of teeth to be treated, the transition area includes a ridge, and a cavity is formed between an inner wall of the ridge close to the interdental space and the interdental space.

As a further improvement of one embodiment of the present invention, the transition area also includes a matching area connecting the ridge, and a first gap between the ridge and the interdental space is greater than a second gap between the matching area and the interdental space.

As a further improvement of one embodiment of the present invention, the dental orthodontic appliance includes two ridges distributed at intervals, and the two ridges are connected by the matching area.

As a further improvement of one embodiment of the present invention, the ridge also includes an outer wall away from the interdental space, and a thickness between the outer wall and the inner wall is greater than 0.2 mm.

As a further improvement of one embodiment of the present invention, in a direction from a buccal surface to a lingual surface of the appliance body, a cross-section of the ridge is rectangular, trapezoidal, arc-shaped, triangular, polygonal, or "M"-shaped.

Compared to the prior art, one embodiment of the present invention offers following advantages: by providing the ridge on the appliance body that protrudes in the direction away from the cavity, a moment of inertia of the entire dental orthodontic appliance is increased. The moment of inertia can enhance an ability of the dental orthodontic appliance to resist bending in the direction away from the cavity, thereby preventing deformation or fracture of the dental orthodontic appliance.

Furthermore, as the ridge is directly incorporated into the dental orthodontic appliance in this embodiment, patients can achieve the aforementioned effects by directly wearing the dental orthodontic appliance, making it convenient to use and improving user experience.

### BRIEF DESCRIPTION OF THE DRAWINGS

FIG 1 is a perspective view of a dental orthodontic appliance with a ridge according to one embodiment of the present invention.
FIG 2 is a cross-sectional view along line A-A in FIG 1, showing the dental orthodontic appliance fitted with teeth to be treated.
FIG 3 is a digital dental arch model with additional components according to one embodiment of the present invention.
FIG 4 is a cross-sectional view of a dental orthodontic appliance with a ridge fitted with teeth to be treated according to a specific embodiment of the present invention.
FIG 5 is a cross-sectional view of a dental orthodontic appliance with a ridge fitted with teeth to be treated according to another specific embodiment of the present invention.
FIG 6 is a perspective view of a dental orthodontic appliance with a ridge located on an occlusal surface between two molars according to a specific example of the present invention.
FIG 7 is a cross-sectional view along line A-A in FIG 6.
FIG 8 is a perspective view of a dental orthodontic appliance with a ridge located on an occlusal surface between a molar and a premolar according to a specific example of the present invention.
FIG 9 is a perspective view of a dental orthodontic appliance with a ridge located on an occlusal surface between two premolars according to a specific example of the present invention.
FIG 10 is a perspective view of a dental orthodontic appliance with a ridge located on an occlusal surface between a premolar and a canine according to a specific example of the present invention.
FIG 11 is a perspective view of a dental orthodontic appliance with a ridge located on an occlusal surface between a canine and an incisor according to a specific example of the present invention.
FIG. 12 is a perspective view of a dental orthodontic appliance with a ridge located on a buccal surface between two premolars according to a specific example of the present invention.
FIG 13 is a cross-sectional view along line A-A in FIG 12.
FIG 14 is a perspective view of a dental orthodontic appliance with a ridge located on a buccal surface of a molar according to a specific example of the present invention.
FIG 15 is a cross-sectional view along line A-A in FIG 14.
FIG 16 is a perspective view of a dental orthodontic appliance with a ridge located on a lingual surface of a molar according to a specific example of the present invention.
FIG 17 is a cross-sectional view along line A-A in FIG 16.
FIG 18 is a perspective view of a dental orthodontic appliance with a ridge located on a buccal surface of a molar according to a specific example of the present invention.
FIG 19 is a cross-sectional view along line A-A in FIG 18.
FIG 20 is a perspective view of a dental orthodontic appliance with a ridge extending from a molar to a premolar on a buccal surface according to a specific example of the present invention.
FIG 21 is a cross-sectional view along line A-A in FIG 20.
FIG 22 is a cross-sectional view along line B-B in FIG 20.
FIG 23 is a perspective view of a dental orthodontic appliance with multiple ridges forming a combined ridge with free ends according to a specific example of the present invention.
FIG 24 is a perspective view of a dental orthodontic appliance with multiple ridges forming a combined ridge with an enclosed area according to a specific example of the present invention.
FIG 25 is a perspective view of teeth to be treated according to a specific embodiment of the present invention.
FIG 26 is a perspective view of a dental orthodontic appliance with a ridge located on an occlusal surface and fitted with the teeth to be treated as shown in FIG 25.
FIG 27 is a cross-sectional view along line A-A in FIG 26.
FIG 28 is a cross-sectional view along line C-C in FIG 26.
FIG 29 is a perspective view of a dental orthodontic appliance of the prior art.
FIG 30 is a cross-sectional view along line A-A in FIG 29.
FIGS. 31 to 36 are schematic cross-sectional views of ridges according to one embodiment of the present invention.
FIG 37 is a perspective view of a dental orthodontic appliance with multiple ridges on an occlusal surface according to other embodiments of the present invention.
FIG 38 is a perspective view of teeth to be treated with an extraction area according to other embodiments of the present invention.
FIG 39 is a perspective view of a dental orthodontic appliance with a void area fitted with the teeth to be treated as shown in FIG 38 according to other embodiments of the present invention.

### DETAILED DESCRIPTION OF EMBODIMENTS

The following detailed description of the embodiments will be made with reference to the accompanying drawings. However, these embodiments do not limit the present invention, and any structural, methodological, or functional variations made by those skilled in the art based on these embodiments are included within the scope of protection of the present invention.

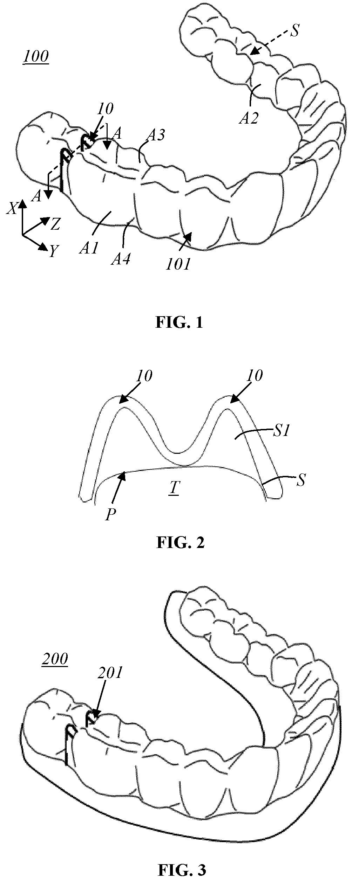

Referring to FIGS. 1 and 2, a dental orthodontic appliance 100 with a ridge 10 according to one embodiment of the present invention is shown.

The dental orthodontic appliance 100 comprises an appliance body 101 forming a cavity S for accommodating teeth, and a ridge 10 connected to the appliance body 101.

The ridge 10 protrudes from the appliance body 101 in a direction away from the cavity S.

In this embodiment, by providing the ridge 10 on the appliance body 101 that protrudes in a direction away from the cavity S, a moment of inertia of the entire dental orthodontic appliance 100 about an axis of rotation can be increased, which can enhance an ability of the dental orthodontic appliance 100 to resist bending in the direction away from the cavity S, which is a primary direction of force application when removing the orthodontic appliance. That is, an arrangement of the ridge 10 can improve a local rigidity of the dental orthodontic appliance 100, thereby preventing deformation or fracture of the dental orthodontic appliance 100.

Additionally, as the ridge 10 is directly incorporated into the dental orthodontic appliance 100 in this embodiment, patients can achieve the aforementioned effects by directly wearing the dental orthodontic appliance 100, making it convenient to use and improving user experience.

It should be noted that in examples of using the dental orthodontic appliance 100 for treatment, the treatment is typically divided into multiple successive stages (for example, 20 to 40 successive stages). Each stage corresponds to a dental orthodontic appliance 100. The ridge 10 can be added or not added according to specific requirements of different stages, and addition parameters of the ridge 10 can be freely designed according to the specific requirements of different stages. The addition parameters include number, position, and shape of the ridge 10.

In this embodiment, the ridge 10 is strip-shaped.

Here, "the ridge 10 is strip-shaped" means that the ridge 10 has a certain length of extension in a particular direction. Of course, in other embodiments, the ridge 10 can also have other shapes, such as point-shaped, etc.

In this embodiment, in the direction X away from the cavity S, the ridge 10 has a first height, and a maximum value of the first height ranges from 0.1 mm to 10 mm.

In an extension direction Y of the ridge 10, the ridge 10 has a first length, and the first length is greater than 0.5 mm.

Here, the extension direction Y of the ridge 10 is a mesiodistal direction Y Of course, the ridge 10 can also extend in other directions.

It should be noted that an actual direction of the mesiodistal direction Y may change for different areas. The mesiodistal direction Y can be considered as a direction from one tooth corresponding to the ridge 10 towards an adjacent tooth.

In a direction Z that is simultaneously perpendicular to the direction X away from the cavity S and the extension direction Y of the ridge 10, the ridge 10 has a first width, and a maximum value of the first width ranges from 0.2 mm to 8 mm.

Here, the direction Z is a direction from a buccal surface A1 to a lingual surface A2 of the appliance body 101. Of course, when directions X and Y change, the direction Z will change accordingly.

In this embodiment, in the direction away from the cavity S, the outer contour of the cross-section of the ridge 10 is rectangular, trapezoidal, arc-shaped, triangular, polygonal, or "M"-shaped, but not limited to these.

Here, the outer contour refers to the outer contour of a single ridge 10. The "M" shape means that the outer contour has one or more concavities, and the degree of concavity is not limited.

In this embodiment, the ridge 10 includes a receiving cavity S1 communicating with the cavity S, and the receiving cavity S1 is integrally formed with the appliance body 101.

Referring to FIG 3, an appropriate additional component 201 can be designed on a digital dental arch model 200 in advance. Addition parameters of the additional component 201 are consistent with the addition parameters of the actual required ridge 10.

Then, a dental model with the additional component 201 is made using photocurable material, and thermoforming is performed on the dental model using a thermal pressing film to obtain a corresponding negative mold. After trimming the excess parts of the negative mold, a dental orthodontic appliance 100 with the ridge 10 (i.e., receiving cavity S1) is finally obtained.

It should be noted that the additional component 201 can also be replaced by changing a curvature of specific areas on the digital dental arch model 200.

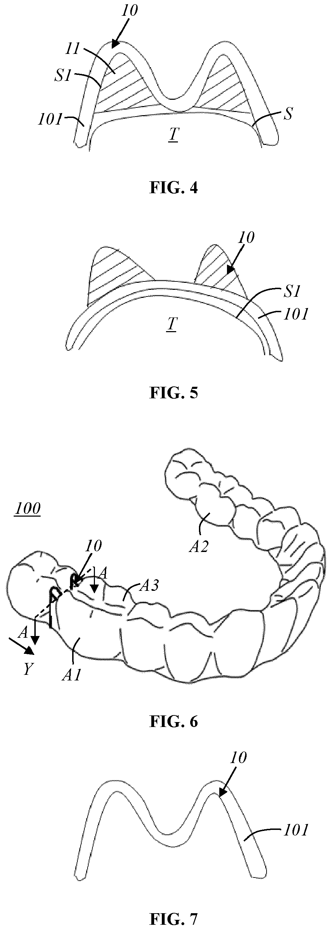

In one specific embodiment, referring to FIG 4, the ridge 10 also includes a filling part 11 fixed within the receiving cavity S1.

Here, the filling part 11, as a part of the dental orthodontic appliance 100, can be fixed to an inner wall of the receiving cavity S1. The filling part 11 can enhance the strength of the ridge 10. The filling part 11 can be a pre-formed filling part 11, or the filling part 11 can be directly formed within the receiving cavity S1 through filling and curing processes.

In another specific embodiment, referring to FIG 5, the ridge 10 is fixed on a side surface of the appliance body 101 away from the cavity S, that is, in this case, the aforementioned receiving cavity S1 is cancelled, and the ridge 10 is directly fixed on an outer side surface of the appliance body 101.

In this embodiment, the ridge 10 is set corresponding to an anterior teeth area and/or a posterior teeth area of the teeth T to be treated.

The ridge 10 is located on the buccal surface A1, the lingual surface A2, or an occlusal surface A3 of the appliance body 101.

Additionally, the ridge 10 is set corresponding to at least one of tooth surface, interdental space P, or void area of the teeth T to be treated.

Here, "tooth surface" refers to a surface of each tooth T to be treated that is close to the buccal surface, a surface close to the lingual surface, or the occlusal surface. "Interdental space P" refers to an area between two adjacent teeth T to be treated. "Void area" refers to an extraction area or an area with a larger gap. "At least one" means that one ridge 10 can cover one or more areas among the tooth surface, the interdental space P, or the void area of the teeth T to be treated simultaneously.

The ridge 10 can have multiple extension directions. For example, the extension direction of the ridge 10 can be parallel to the mesiodistal direction Y, or the extension direction of the ridge 10 can be perpendicular to the mesiodistal direction Y, or an angle formed between the extension direction of the ridge 10 and the mesiodistal direction Y can be an acute angle, and the ridge 10 can be linear or curved.

The dental orthodontic appliance 100 can include one ridge 10 or multiple ridges 10 located on the appliance body 101.

When there are multiple ridges 10, the multiple ridges 10 can be distributed at intervals, or the multiple ridges 10 can be interconnected.

Next, several specific examples of the dental orthodontic appliance 100 will be introduced.

Referring to FIGS. 6 and 7, the dental orthodontic appliance 100 includes two ridges 10 located on the occlusal surface A3 in the posterior teeth area. The two ridges 10 are distributed at intervals, and the extension directions of both ridges 10 are parallel to the mesiodistal direction Y One ridge 10 is set close to the buccal surface A1, and the other ridge 10 is set close to the lingual surface A2.

Specifically, the ridges 10 are mainly set corresponding to the interdental space P, and the interdental space P corresponds to a gap between two adjacent molars.

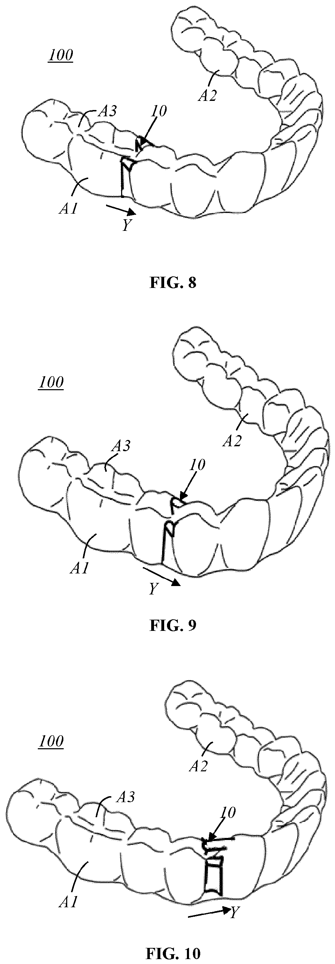

Referring to FIG 8, the dental orthodontic appliance 100 includes two ridges 10 located on the occlusal surface A3 in the posterior and anterior teeth areas. The two ridges 10 are distributed at intervals, and the extension directions of both ridges 10 are parallel to the mesiodistal direction Y One ridge 10 is set close to the buccal surface A1, and the other ridge 10 is set close to the lingual surface A2.

Specifically, the ridges 10 are mainly set corresponding to the interdental space P, and the interdental space P corresponds to a gap between a molar and a premolar.

Referring to FIG 9, the dental orthodontic appliance 100 includes two ridges 10 located on the occlusal surface A3 in the anterior teeth area. The two ridges 10 are distributed at intervals, and the extension directions of both ridges 10 are parallel to the mesiodistal direction Y One ridge 10 is set close to the buccal surface A1, and the other ridge 10 is set close to the lingual surface A2.

Specifically, the ridges 10 are mainly set corresponding to the interdental space P, and the interdental space P corresponds to a gap between two premolars.

Referring to FIG 10, the dental orthodontic appliance 100 includes two ridges 10 located on the occlusal surface A3 in the anterior teeth area. The two ridges 10 are distributed at intervals, and the extension directions of both ridges 10 are parallel to the mesiodistal direction Y One ridge 10 is set close to the buccal surface A1, and the other ridge 10 is set close to the lingual surface A2.

Specifically, the ridges 10 are mainly set corresponding to the interdental space P, and the interdental space P corresponds to a gap between a premolar and a canine.

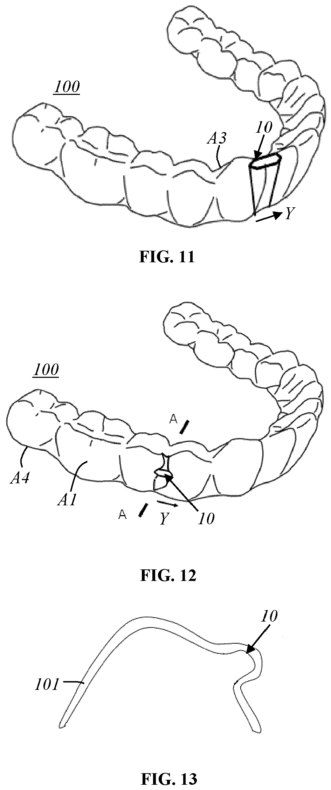

Referring to FIG 11, the dental orthodontic appliance 100 includes one ridge 10 located on the occlusal surface A3 in the anterior teeth area, and the extension direction of the ridge 10 is parallel to the mesiodistal direction Y

Specifically, the ridge 10 is mainly set corresponding to the interdental space P, and the interdental space P corresponds to a gap between a canine and an incisor.

Referring to FIGS. 12 and 13, the dental orthodontic appliance 100 includes one ridge 10 located on the buccal surface A1 in the anterior teeth area, and the extension direction of the ridge 10 is parallel to the mesiodistal direction Y The ridge 10 is mainly set corresponding to the interdental space on the buccal surface A1.

Here, when the ridge 10 is located on the buccal surface A1 and the extension direction of the ridge 10 is parallel to the mesiodistal direction Y, to avoid affecting the overall fit between the dental orthodontic appliance 100 and the teeth T to be treated, the ridge 10 cannot be set too close to a gingival end A4.

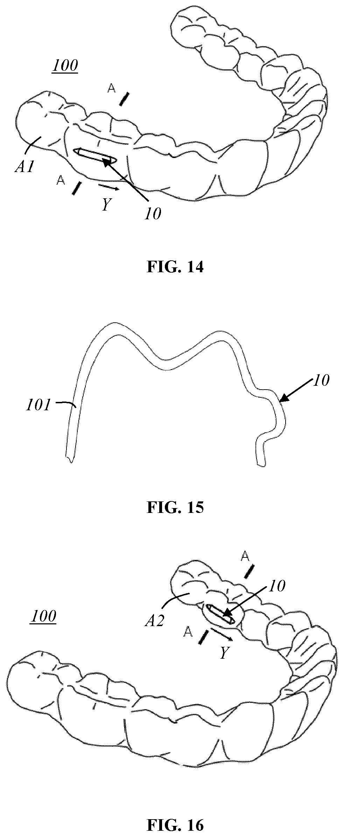

Referring to FIGS. 14 and 15, the dental orthodontic appliance 100 includes one ridge 10 located on the buccal surface A1 in the posterior teeth area, and the extension direction of the ridge 10 is parallel to the mesiodistal direction Y The ridge 10 is set corresponding to the tooth surface on the buccal surface A1.

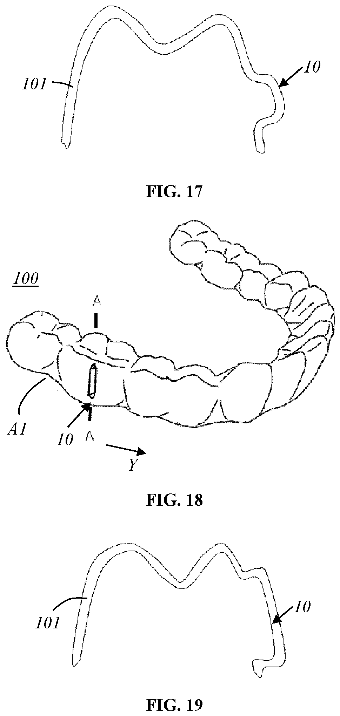

Referring to FIGS. 16 and 17, the dental orthodontic appliance 100 includes one ridge 10 located on the lingual surface A2 in the posterior teeth area, and the extension direction of the ridge 10 is parallel to the mesiodistal direction Y The ridge 10 is set corresponding to the tooth surface on the lingual surface A2.

Referring to FIGS. 18 and 19, the dental orthodontic appliance 100 includes one ridge 10 located on the buccal surface A1 in the posterior teeth area, and the extension direction of the ridge 10 is perpendicular to the mesiodistal direction Y The ridge 10 is set corresponding to the tooth surface on the buccal surface A1.

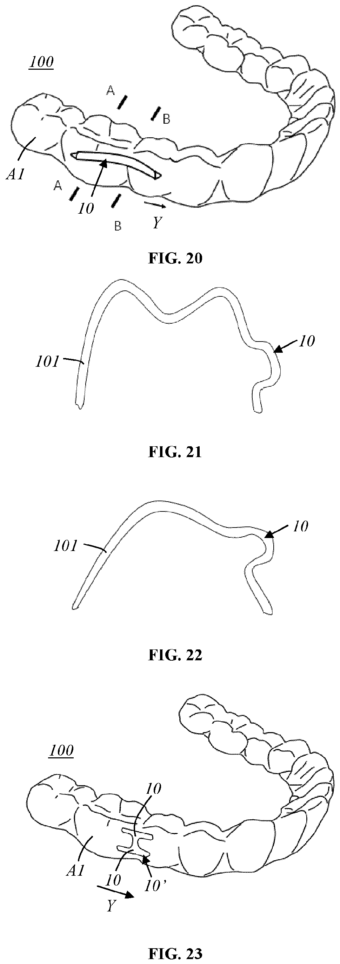

Referring to FIGS. 20 to 22, the dental orthodontic appliance 100 includes one ridge 10 located on the buccal surface A1 in the posterior teeth area, and an angle formed between the extension direction of the ridge 10 and the mesiodistal direction Y is an acute angle, that is, the ridge 10 is set at an incline. The ridge 10 simultaneously covers the tooth surface and interdental space P on the buccal surface A1.

Referring to FIG 23, the dental orthodontic appliance 100 includes three ridges 10 located on the buccal surface A1. The three ridges 10 are interconnected to form a combined ridge 10'. The combined ridge 10' is mainly set corresponding to the interdental space P on the buccal surface A1, and the interdental space P corresponds to a gap between a molar and a premolar.

Specifically, the combined ridge 10' is roughly "I"-shaped. The extension directions of the upper and lower ridges 10 are parallel to the mesiodistal direction Y, and the extension direction of a middle ridge 10 is perpendicular to the mesiodistal direction Y The combined ridge 10' includes free end.

Here, "free end" means that one or more ends of the ridges 10 themselves are not connected to other ridge 10. Four ends of the "I"-shaped ridge 10 are all free ends.

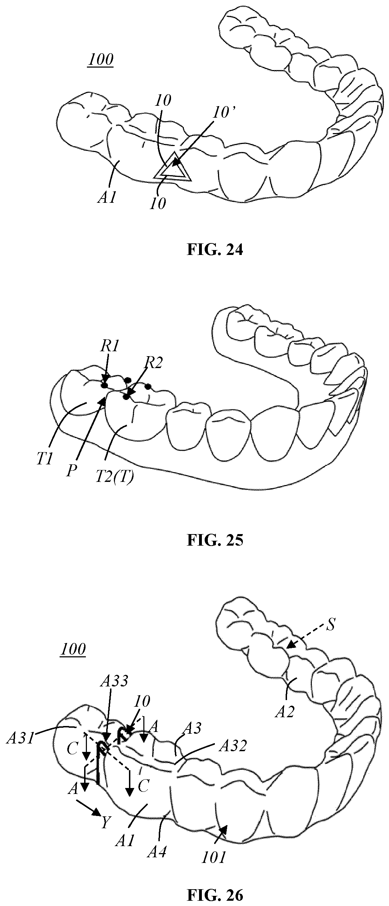

Referring to FIG 24, the dental orthodontic appliance 100 includes three ridges 10 located on the buccal surface A1. The three ridges 10 are interconnected to form a combined ridge 10'. The combined ridge 10' is mainly set corresponding to the interdental space P on the buccal surface A1, and the interdental space P corresponds to a gap between a molar and a premolar.

Specifically, the combined ridge 10' forms an enclosed area with its ends connected. Here, it roughly forms a triangular shape. In this case, the combined ridge 10' does not have the free end.

It can be understood that the above are just examples of various specific examples of the dental orthodontic appliance 100. Other improved dental orthodontic appliances based on these specific examples are also included within the scope of protection of the present invention.

Next, further explanation will be given for a specific embodiment where the ridge 10 is located on the occlusal surface A3 of the appliance body 101.

Referring to FIGS. 25 to 28, the occlusal surface A3 of the appliance body 101 includes a transition area A33 corresponding to the interdental space P of the teeth T to be treated. The transition area A33 includes the ridge 10, and here, the ridge 10 is exemplified as being located in the posterior teeth area.

Here, the interdental space P is located between a first tooth T1 and a second tooth T2. The occlusal surface A3 of the appliance body 101 includes a first occlusal surface A31 and a second occlusal surface A32 matching the first tooth T1 and the second tooth T2 respectively. The transition area A33 connects the first occlusal surface A31 and the second occlusal surface A32.

Here, the first occlusal surface A31 and the second occlusal surface A32 are defined as surfaces that interact with the opposing teeth.

In this specific embodiment, the transition area A33 includes the ridge 10. A cavity S2 is formed between an inner wall 12 of the ridge 10 close to the interdental space P and the interdental space P, which can increase the moment of inertia of the transition area A33.

Here, in the direction from the buccal surface A1 to the lingual surface A2 of the appliance body 101, a maximum value of a second width of the cavity S2 ranges from 0.5 mm to 5 mm.

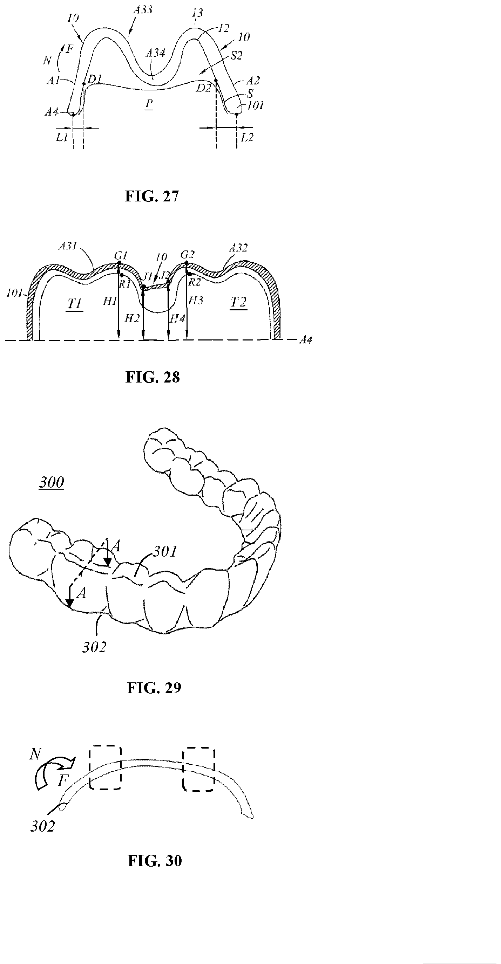

Referring to FIGS. 29 and 30, which show a dental orthodontic appliance 300 without ridge in the prior art, it can be seen that in a direction from an occlusal surface 301 to a gingival end 302, a cross-section of the dental orthodontic appliance 300 corresponding to an interdental space is roughly a flat arc shape. In this case, if a force F in direction M is applied at the gingival end 302, due to the smaller moment of inertia at this time, when the force F is large, the dental orthodontic appliance 300 is prone to deformation or fracture. Direction N is a direction away from the cavity S, corresponding to a main direction of force application when removing the dental orthodontic appliance 300.

In this specific embodiment, the transition area A33 has the ridge 10, which is equivalent to enhancing an area in the dotted box in FIG 30. This can increase the moment of inertia of the dental orthodontic appliance 100 in this area. In this case, when the same force F in direction M is applied at the gingival end A4, the dental orthodontic appliance 100 can avoid deformation and fracture.

In other words, this specific embodiment can increase the local rigidity of the transition area A33 by adding the ridge 10 to the transition area A33, thereby avoiding deformation or fracture of the dental orthodontic appliance 100.

In this specific embodiment, continuing to refer to FIGS. 25 to 27, the transition area A33 also includes a matching area A34 connecting the ridge 10. A first gap between the ridge 10 and the interdental space P is greater than a second gap between the matching area A34 and the interdental space P. The ridge 10 and the matching area A34 transition smoothly.

In other words, the matching area A34 is closer to the interdental space P compared to the ridge 10.

It should be noted that, referring to FIG 27, the interdental space P specifically refers to a side of the first tooth T1 close to the second tooth T2, and a side of the second tooth T2 close to the first tooth T1.

Specifically, the ridge 10 corresponds to an area of the transition area A33 that has been enhanced, while the matching area A34 corresponds to an area of the transition area A33 that has not been treated. That is, the transition area A33 includes a part with a gap from the interdental space P and a part closely fitting the interdental space P. This can increase the moment of inertia of the transition area A33 while avoiding affecting a fit between the transition area A33 and the interdental space P by enhancing too much area.

In this specific embodiment, a thickness of any area of the ridge 10 is greater than 0.2 mm.

Specifically, the ridge 10 also includes an outer wall 13 away from the interdental space P. The thickness between the outer wall 13 and the inner wall 12 is greater than 0.2 mm.

It should be noted that in some embodiments, at least two areas of the ridge 10 have different thicknesses, that is, the ridge 10 are a structure with varying thickness, but this is not limited.

In this specific embodiment, continuing to refer to FIGS. 25 to 27, a first cross-section is defined on the dental orthodontic appliance 100. The first cross-section passes through the ridge 10 and is perpendicular to the mesiodistal direction Y, that is, the first cross-section is a cross-section in the A-A direction shown in FIG 27.

An intersection area of the ridge 10 and the first cross-section includes lowest points D1, D2 close to the buccal surface A1 or lingual surface A2. In the direction from the buccal surface A1 to the lingual surface A2 of the dental orthodontic appliance 100 (i.e., roughly the horizontal direction), the distance between the lowest points D1, D2 and the gingival end A4 in the first cross-section ranges from 0.5 mm to 8 mm.

Here, the lowest points D1, D2 correspond to points at very ends of the ridge 10, including a first lowest point D1 closest to the buccal surface A1 of the ridge 10 and a second lowest point D2 closest to the lingual surface A2 of the ridge 10. The first lowest point D1 and the second lowest point D2 are roughly in close contact with the teeth T to be treated T.

Specifically, in the direction from the buccal surface A1 to the lingual surface A2 of the dental orthodontic appliance 100, there is a first distance L1 between the first lowest point D1 and the gingival end A4, and there is a second distance L2 between the second lowest point D2 and the gingival end A4. Both the first distance L1 and the second distance L2 range from 0.5 mm to 4 mm.

Optionally, both the first distance L1 and the second distance L2 range from 1 mm to 3.5 mm.

The first distance L1 and the second distance L2 are distances in the direction from the buccal surface A1 to the lingual surface A2. By setting appropriate first distance L1 and second distance L2, the wrapping of the dental orthodontic appliance 100 around the teeth T to be treated can be improved.

In this specific embodiment, continuing to refer to FIG 28, a second cross-section is defined on the dental orthodontic appliance 100. The second cross-section passes through the ridge 10 and is perpendicular to the direction from the buccal surface A1 to the lingual surface A2, that is, the second cross-section is a cross-section in the C-C direction shown in FIG 28.

An intersection area of the first occlusal surface A31 and the second cross-section includes a first highest point G1 close to the transition area A33. An intersection area of the second occlusal surface A32 and the second cross-section includes a second highest point G2 close to the transition area A33.

Here, taking an example of the second cross-section passing through cusps of the first tooth T1 and the second tooth T2, the first highest point G1 corresponds to the cusp R1 of the first tooth T1 close to the second tooth T2, and the second highest point G2 corresponds to the cusp R2 of the second tooth T2 close to the first tooth T1.

An intersection point of a first end 14 of the ridge 10 and the second cross-section is a first intersection point J1, and an intersection point of a second end 15 and the second cross-section is a second intersection point J2.

Here, the first intersection point J1 and the second intersection point J2 are two endpoints of the ridge 10 in the second cross-section.

The first highest point G1 is farther from the gingival end A4 than the first intersection point J1, and the second highest point G2 is farther from the gingival end A4 than the second intersection point J2.

In this case, when the dental orthodontic appliance 100 is in occlusal contact with the opposing teeth, the opposing teeth will not come into contact with the ridge 10, avoiding the ridge 10 affecting normal occlusion process.

Specifically, in the direction from the occlusal surface A3 to the gingival end A4 of the dental orthodontic appliance 100 (i.e., roughly the vertical direction), there is a first distance H1 between the first highest point G1 and the gingival end A4, there is a second distance H2 between the first intersection point J1 and the gingival end A4, there is a third distance H3 between the second highest point G2 and the gingival end A4, and there is a fourth distance H4 between the second intersection point J2 and the gingival end A4. A ratio of the second distance H2 to the first distance H1 is not less than 20%, and a ratio of the fourth distance H4 to the third distance H3 is not less than 20%.

Additionally, the ratio of the second distance H2 to the first distance H1 is not greater than 95%, and the ratio of the fourth distance H4 to the third distance H3 is not greater than 95%.

Optionally, the second distance H2 is 40%-80% of the first distance H1, and the fourth distance H4 is 40%-80% of the third distance H3.

Furthermore, continuing to refer to FIG 28, in the second cross-section, in the direction from the occlusal surface A3 to the gingival end A4 of the dental orthodontic appliance 100, any point of the dental orthodontic appliance 100 has a vertical distance from the gingival end A4. The vertical distance gradually decreases between the first highest point G1 and the first intersection point J1, and the vertical distance gradually decreases between the second highest point G2 and the second intersection point J2. The vertical distance remains constant or shows a gradual change trend between the first intersection point J1 and the second intersection point J2.

In other words, a height of the appliance body 101 gradually decreases from the first highest point G1 to the first intersection point J1, and the height of the appliance body 101 gradually decreases from the second highest point G2 to the second intersection point J2. The height of the appliance body 101 between the first intersection point J1 and the second intersection point J2 remains constant or shows a gradual change trend. This allows the ridge 10 to transition smoothly between the first occlusal surface A31 and the second occlusal surface A32.

It should be noted that a trend of change in the vertical distance between the first intersection point J1 and the second intersection point J2 is affected by a specific shape of the first tooth T1 and the second tooth T2 and can be determined based on actual conditions.

In this specific embodiment, continuing to refer to FIGS. 25 to 28, the ridge 10 includes the first end 14 and the second end 15 relatively set in the extension direction of the ridge 10. The first end 14 is close to the first occlusal surface A31, and the second end 15 is close to the second occlusal surface A32.

Here, the extension direction of the ridge 10 is parallel to the mesiodistal direction Y Of course, there can also be a small angle between the extension direction of the ridge 10 and the mesiodistal direction Y

The ridge 10 is set close to the buccal surface A1, the lingual surface A2 of the appliance body 101, or centrally located.

Specifically, the dental orthodontic appliance 100 includes two ridges 10 distributed at intervals. The two ridges 10 are set close to the buccal surface A1 and the lingual surface A2 respectively, and the two ridges 10 are connected by the matching area A34.

The first end 14 and the second end 15 of one ridge 10 are both set close to the buccal surface A1, and the first end 14 and the second end 15 of the other ridge 10 are both set close to the lingual surface A2.

It can be understood that setting two ridges 10 in the same transition area A33 can further increase the moment of inertia of the transition area A33, thereby further preventing deformation or fracture of the dental orthodontic appliance 100.

At this time, in the direction from the buccal surface A1 to the lingual surface A2 of the appliance body 101, a profile formed by a combination of the two ridges 10 and the matching area A34 in the transition area A33 is "M"-shaped.

Specifically, in the direction from the buccal surface A1 to the lingual surface A2 of the appliance body 101, the cross-section of the single ridge 10 is rectangular, trapezoidal, arc-shaped, triangular, polygonal, or "M"-shaped.

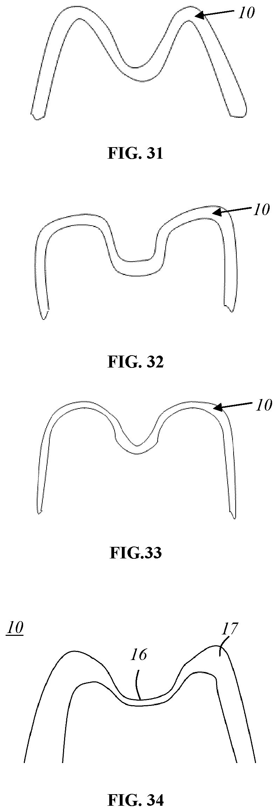

Referring to FIG 31, the transition area A33 includes two ridges 10, and the cross-section of the single ridge 10 is triangular.

Referring to FIG 32, the transition area A33 includes two ridges 10, and the cross-section of the single ridge 10 is rectangular.

Referring to FIG 33, the transition area A33 includes two ridges 10, and the cross-section of the single ridge 10 is arc-shaped.

Referring to FIGS. 34 to 36, the transition area A33 includes one ridge 10, and the cross-section of the single ridge 10 is "M"-shaped.

Here, the single ridge 10 includes a recessed part 16 and two protruding parts 17 located on both sides of the recessed part 16. The recessed part 16 is closer to the interdental space P than the protruding parts 17.

Specifically, referring to FIG 34, a degree of concavity of the recessed part 16 is large, and both the inner wall and the outer wall of the ridge 10 are roughly "M"-shaped.

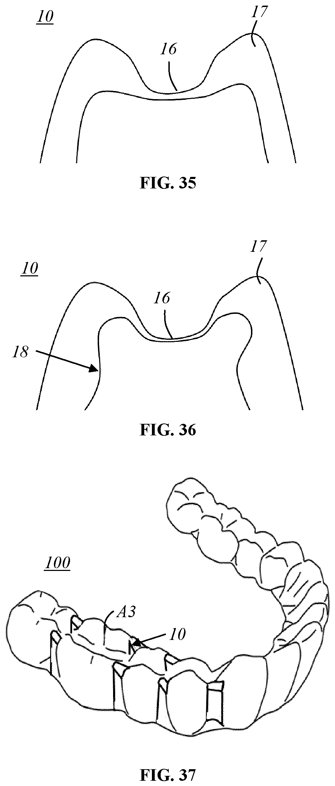

Referring to FIG 35, compared to the ridge 10 in FIG 34, the degree of concavity of the recessed part 16 in FIG 35 is smaller. The outer wall of the ridge 10 is roughly "M"-shaped, while the inner wall is roughly shaped like a single "II" character.

Referring to FIG 36, compared to the ridge 10 in FIG 34, the ridge 10 in FIG 36 further includes notches 18 set close to the buccal surface A1 and the lingual surface A2.

It can be understood that in other specific designs, number and position of the recessed parts 16 and the protruding part 17 can also be in other forms.

It should be noted that in other embodiments, for one ridge 10, the first end 14 can be set close to the buccal surface A1 of the appliance body 101, and the second end 15 can be set close to the lingual surface A2 of the appliance body 101. That is, the ridge 10 is set at an incline in the transition area A33, and an angle formed between the extension direction of the ridge 10 and the mesiodistal direction Y is an acute angle.

Referring to FIG 37, the ridges 10 can be formed at multiple interdental spaces P on the occlusal surface A3, thereby further increasing the moment of inertia of the entire dental orthodontic appliance 100.

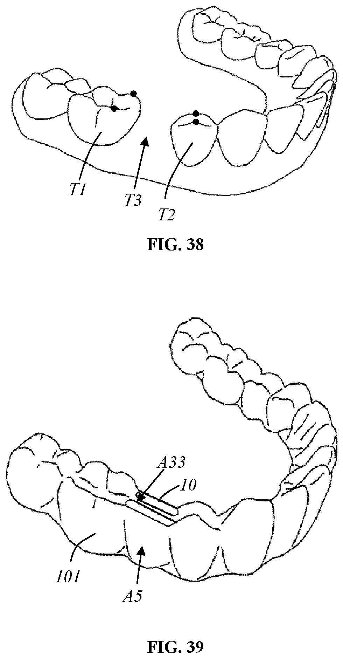

Additionally, referring to FIGS. 38 and 39, there is an extraction area T3 between the first tooth T1 and the second tooth T2. The appliance body 101 includes a void area A5 corresponding to the extraction area T3, and the transition area A33 covers the void area A5.

In other words, when the interdental space P between the first tooth T1 and the second tooth T2 includes the extraction area T3, the transition area A33 extends from the first occlusal surface A31 through the void area A5 to reach the second occlusal surface A32, and an extension area of the ridge 10 covers the void area A5.

Here, the moment of inertia in this area can be increased by setting the ridge 10 in the void area A5.

In summary, the present invention provides the ridge 10 on the appliance body 101 that protrudes in the direction away from the cavity S, which can increase the moment of inertia of the entire dental orthodontic appliance 100. The moment of inertia can enhance the ability of the dental orthodontic appliance 100 to resist bending in the direction away from the cavity S, which is the primary direction of force application when removing the orthodontic appliance. That is, the arrangement of the ridge 10 can improve the local rigidity of the orthodontic appliance 100, thereby preventing deformation or fracture of the dental orthodontic appliance 100.

Additionally, as the ridge 10 is directly incorporated into the dental orthodontic appliance 100 in this embodiment, patients can achieve the aforementioned effects by directly wearing the dental orthodontic appliance 100, making it convenient to use and improving user experience.

It should be understood that although this specification describes the invention according to embodiments, not every embodiment contains only one independent technical solution. This method of description is only for clarity. Those skilled in the art should consider the specification as a whole, and the technical solutions in the embodiments can also be appropriately combined to form other embodiments that can be understood by those skilled in the art.

The series of detailed descriptions listed above are only specific explanations of the feasible embodiments of the present invention. They are not used to limit the scope of protecti on of the present invention. Any equivalent implementations or changes made without departing from the technical spirit of the present invention should be included within the scope of protection of the present invention.

## Claims

1. A dental orthodontic appliance with a ridge, **characterized in that** it comprises an appliance body forming a cavity for accommodating teeth, and the ridge connected to the appliance body, wherein the ridge protrudes from the appliance body in a direction away from the cavity.

2. The dental orthodontic appliance according to claim 1, **characterized in that** the ridge is strip-shaped.

3. The dental orthodontic appliance according to claim 1, **characterized in that** the ridge comprises a receiving cavity communicating with the cavity.

4. The dental orthodontic appliance according to claim 3, **characterized in that** the receiving cavity is integrally formed with the appliance body.

5. The dental orthodontic appliance according to claim 3, **characterized in that** the ridge further comprises a filling part fixed within the receiving cavity.

6. The dental orthodontic appliance according to claim 1, **characterized in that** the ridge is fixed on a side surface of the appliance body away from the cavity.

7. The dental orthodontic appliance according to claim 1, **characterized in that** an extension direction of the ridge is parallel to a mesiodistal direction.

8. The dental orthodontic appliance according to claim 1, **characterized in that** an extension direction of the ridge is perpendicular to a mesiodistal direction.

9. The dental orthodontic appliance according to claim 1, **characterized in that** an angle formed between an extension direction of the ridge and a mesiodistal direction is an acute angle.

10. The dental orthodontic appliance according to claim 1, **characterized in that** the ridge is located on a buccal surface, a lingual surface, or an occlusal surface of the appliance body.

11. The dental orthodontic appliance according to claim 1, **characterized in that** the ridge is set corresponding to an anterior teeth area and/or a posterior teeth area of teeth to be treated.

12. The dental orthodontic appliance according to claim 1, **characterized in that** the ridge is set corresponding to at least one of a tooth surface, an interdental space, or a void area of teeth to be treated.

13. The dental orthodontic appliance according to claim 1, **characterized in that** in the direction away from the cavity, the ridge has a first height, and a maximum value of the first height ranges from 0.1 mm to 10 mm.

14. The dental orthodontic appliance according to claim 1, **characterized in that** in an extension direction of the ridge, the ridge has a first length, and the first length is greater than 0.5 mm.

15. The dental orthodontic appliance according to claim 1, **characterized in that** in a direction simultaneously perpendicular to the direction away from the cavity and an extension direction of the ridge, the ridge has a first width, and a maximum value of the first width ranges from 0.2 mm to 8 mm.

16. The dental orthodontic appliance according to claim 1, **characterized in that** in the direction away from the cavity, an outer contour of a cross-section of the ridge is rectangular, trapezoidal, arc-shaped, triangular, polygonal, or "M"-shaped.

17. The dental orthodontic appliance according to claim 1, **characterized in that** the dental orthodontic appliance comprises multiple ridges located on the appliance body.

18. The dental orthodontic appliance according to claim 17, **characterized in that** the multiple ridges are distributed at intervals.

19. The dental orthodontic appliance according to claim 17, **characterized in that** the multiple ridges are interconnected to form a combined ridge.

20. The dental orthodontic appliance according to claim 19, **characterized in that** the combined ridge comprises a free end.

21. The dental orthodontic appliance according to claim 19, **characterized in that** the combined ridge forms an enclosed area.

22. The dental orthodontic appliance according to claim 1, **characterized in that** an occlusal surface of the appliance body comprises a transition area corresponding to an interdental space of teeth to be treated, and the transition area comprises the ridge.

23. The dental orthodontic appliance according to claim 22, **characterized in that** the transition area also comprises a matching area connecting the ridge, and a first gap between the ridge and the interdental space is greater than a second gap between the matching area and the interdental space.

24. The dental orthodontic appliance according to claim 23, **characterized in that** the dental orthodontic appliance comprises two ridges distributed at intervals, and the two ridges are connected by the matching area.

25. The dental orthodontic appliance according to claim 22, **characterized in that** the ridge comprises a recessed part and two protruding parts located on both sides of the recessed part, and the recessed part is closer to the interdental space than the protruding parts.

26. The dental orthodontic appliance according to claim 22, **characterized in that** a thickness of the ridge is greater than 0.2 mm.

27. The dental orthodontic appliance according to claim 22, **characterized in that** the ridge comprises an inner wall close to the interdental space, a cavity is formed between the inner wall and the interdental space, and in a direction from a buccal surface to a lingual surface of the appliance body, a maximum value of a second width of the cavity ranges from 0.5 mm to 5 mm.

28. The dental orthodontic appliance according to claim 22, **characterized in that** the interdental space is located between a first tooth and a second tooth, the occlusal surface comprises a first occlusal surface and a second occlusal surface matching the first tooth and the second tooth respectively, and the ridge comprises a first end and a second end relatively set in an extension direction of the ridge, with the first end close to the first occlusal surface and the second end close to the second occlusal surface.

29. The dental orthodontic appliance according to claim 28, **characterized in that** there is an extraction area between the first tooth and the second tooth, the appliance body comprises a void area corresponding to the extraction area, and the transition area covers the void area.

30. The dental orthodontic appliance according to claim 28, **characterized in that** the first end is set close to a buccal surface of the appliance body, and the second end is set close to a lingual surface of the appliance body.

31. The dental orthodontic appliance according to claim 28, **characterized in that** the extension direction of the ridge is parallel to a mesiodistal direction.

32. The dental orthodontic appliance according to claim 28, **characterized in that** a first cross-section is defined on the dental orthodontic appliance, the first cross-section passes through the ridge and is perpendicular to a mesiodistal direction, an intersection area of the ridge and the first cross-section comprises lowest points close to a buccal surface or a lingual surface, and in a direction from the buccal surface to the lingual surface of the dental orthodontic appliance, a distance between the lowest points and a gingival end in the first cross-section ranges from 0.5 mm to 8 mm.

33. The dental orthodontic appliance according to claim 32, **characterized in that** the lowest points comprise a first lowest point close to the buccal surface and a second lowest point close to the lingual surface, and in the direction from the buccal surface to the lingual surface of the dental orthodontic appliance, there is a first distance between the first lowest point and the gingival end on the buccal surface in the first cross-section, there is a second distance between the second lowest point and the gingival end on the lingual surface in the first cross-section, and both the first distance and the second distance range from 0.5 mm to 4 mm.

34. The dental orthodontic appliance according to claim 33, **characterized in that** both the first distance and the second distance range from 1 mm to 3.5 mm.

35. The dental orthodontic appliance according to claim 28, **characterized in that** a second cross-section is defined on the dental orthodontic appliance, the second cross-section passes through the ridge and is perpendicular to a direction from a buccal surface to a lingual surface, an intersection area of the first occlusal surface and the second cross-section comprises a first highest point close to the transition area, an intersection area of the second occlusal surface and the second cross-section comprises a second highest point close to the transition area, an intersection point of the first end of the ridge and the second cross-section is a first intersection point, an intersection point of the second end and the second cross-section is a second intersection point, the first highest point is farther from a gingival end than the first intersection point, and the second highest point is farther from the gingival end than the second intersection point.

36. The dental orthodontic appliance according to claim 35, **characterized in that** in the direction from the occlusal surface to the gingival end of the dental orthodontic appliance, there is a first distance between the first highest point and the gingival end, there is a second distance between the first intersection point and the gingival end, there is a third distance between the second highest point and the gingival end, there is a fourth distance between the second intersection point and the gingival end, the ratio of the second distance to the first distance is not less than 20%, and the ratio of the fourth distance to the third distance is not less than 20%.

37. The dental orthodontic appliance according to claim 36, **characterized in that** the ratio of the second distance to the first distance is not greater than 95%, and the ratio of the fourth distance to the third distance is not greater than 95%.

38. The dental orthodontic appliance according to claim 36, **characterized in that** the second distance is 40%-80% of the first distance, and the fourth distance is 40%-80% of the third distance.

39. The dental orthodontic appliance according to claim 35, **characterized in that** in a direction from the occlusal surface to the gingival end of the dental orthodontic appliance, any point of the dental orthodontic appliance has a vertical distance from the gingival end, the vertical distance gradually decreases between the first highest point and the first intersection point, and the vertical distance gradually decreases between the second highest point and the second intersection point.

40. The dental orthodontic appliance according to claim 39, **characterized in that** the vertical distance remains constant or shows a gradual change trend between the first intersection point and the second intersection point.

41. A dental orthodontic appliance with a ridge, **characterized in that** it comprises an appliance body forming a cavity for accommodating teeth, an occlusal surface of the appliance body comprises a transition area corresponding to an interdental space of teeth to be treated, the transition area comprises a ridge, and a cavity is formed between an inner wall of the ridge close to the interdental space and the interdental space.

42. The dental orthodontic appliance according to claim 41, **characterized in that** the transition area also comprises a matching area connecting the ridge, and a first gap between the ridge and the interdental space is greater than a second gap between the matching area and the interdental space.

43. The dental orthodontic appliance according to claim 42, **characterized in that** the dental orthodontic appliance comprises two ridges distributed at intervals, and the two ridges are connected by the matching area.

44. The dental orthodontic appliance according to claim 41, **characterized in that** the ridge also comprises an outer wall away from the interdental space, and a thickness between the outer wall and the inner wall is greater than 0.2 mm.

45. The dental orthodontic appliance according to claim 41, **characterized in that** in a direction from a buccal surface to a lingual surface of the appliance body, a cross-section of the ridge is rectangular, trapezoidal, arc-shaped, triangular, polygonal, or "M"-shaped.
